# EUROPEAN PATENT APPLICATION

(11) **EP 4 776 041 A1**
(43) Date of publication of application: **15.07.2026**
(21) Application number: 24862730.9
(22) Date of filing: 30.08.2024
(51) Int. Cl.: G02B 6/36, G02B 6/44

(54) **OPTICAL CONNECTOR**

(30) Priority: 08.09.2023 JP 2023146074
(71) Applicant: Sumitomo Electric Optifrontier Co., Ltd., Yokohama-shi, Kanagawa 244-8589 (JP)
(72) Inventor: FUJIHARA Yuto, Yokohama-shi, Kanagawa 244-8589 (JP); SHIBATA Masahiro, Yokohama-shi, Kanagawa 244-8589 (JP)
(74) Representative: TBK
(86) International application number: PCT/JP2024/031246
(87) International publication number: WO 2025/053078

(57) **Abstract**

An optical connector (10) is provided with an optical fiber cable (20), a first member (60), a second member (70), and a housing (30). The optical fiber cable has an optical fiber (211), a resin sheath (22) surrounding the optical fiber, and a fibrous tensile body (23) disposed between the sheath and the optical fiber. A portion including the tip of the optical fiber is exposed from the sheath and the tensile body. The first member (60) has a front end (61) positioned near the front end of the optical fiber, a rear end (62) positioned near the optical fiber cable, and a through hole (63) which penetrates the first member from the rear end to the front end and through which a portion including the tip of the optical fiber passes. The second member (70) is disposed around the first member and holds a tip portion of the sheath and a tip portion of the tensile body between the second member and the first member. The housing (30) accommodates the first member, the second member, the tip portion of the sheath, and the tip portion of the tensile body.

## Description

### Technical Field

The present disclosure relates to an optical connector. Priority is claimed on Japanese Patent Application No. 2023-146074, filed on September 8, 2023, the entire content of which is incorporated herein by reference.

### Background Art

Patent Literature 1 discloses an optical connector. The optical connector is an optical connector to which an optical fiber cord including an optical fiber ribbon including a plurality of optical fibers and an outer jacket containing the optical fiber ribbon is assembled, and includes a ferrule member, a fusion protection sleeve, a housing, and a fixing member. The ferrule member holds a plurality of built-in fibers that are fusion-spliced to the plurality of respective optical fibers. The fusion protection sleeve protects fusion splice portions between the plurality of optical fibers and the plurality of built-in fibers. The housing accommodates the ferrule member and the fusion protection sleeve. The housing has a recess in which the torn outer jacket is placed, at a rear end portion. The fixing member is mounted on the rear end portion of the housing, and fixes the outer jacket to the housing by sandwiching the outer jacket between the fixing member and the housing.

### Citation List

### Patent Literature

Patent Literature 1: PCT International Publication No. WO 2012-096246

### Summary of Invention

### Technical Problem

An optical fiber cable includes optical fibers; a sheath made of resin and surrounding the optical fibers; and a tensile member that is fibrous and disposed between the sheath and the optical fibers. When attaching the optical connector to the distal end of such an optical fiber cable, the sheath and the tensile member are peeled from the distal end of the optical fiber cable to expose the optical fibers. Then, after the optical connector including the ferrule and the housing is attached to the distal ends of the optical fibers, the sheath and the tensile member are placed on the outer surface of the housing, and the sheath and the tensile member are sandwiched between the fixing member and the housing, thereby fixing the end portions of the sheath and the tensile member to the housing (for example, refer to Patent Literature 1).

However, when attaching the optical connector having such a structure to the distal end of the optical fiber cable, until the assembly of the housing is completed, assembly work is performed while the sheath and the tensile member peeled from the optical fibers and extending in length remain unattended. Therefore, the sheath and the tensile member peeled from the optical fibers and extending in length may reduce assembly work efficiency.

An object of the present disclosure is to provide an optical connector capable of avoiding a decrease in assembly work efficiency.

### Solution to Problem

An optical connector according to one aspect of the present disclosure includes an optical fiber cable; a first member; a second member; and a housing. The optical fiber cable includes an optical fiber, a sheath made of resin and surrounding the optical fiber, and a tensile member that is fibrous and disposed between the sheath and the optical fiber, and a portion including a distal end of the optical fiber is exposed from the sheath and the tensile member. The first member has a front end located close to the front end of the optical fiber, a rear end located close to the optical fiber cable, and a through-hole which penetrates through the first member from the rear end to the front end and through which the portion including the distal end of the optical fiber passes. The second member is disposed around the first member, and sandwiches and fixes a distal end portion of the sheath and a distal end portion of the tensile member between the second member and the first member. The housing accommodates the first member, the second member, the distal end portion of the sheath, and the distal end portion of the tensile member.

### Advantageous Effects of Invention

According to the present disclosure, it is possible to provide an optical connector capable of avoiding a decrease in assembly work efficiency.

### Brief Description of Drawings

[FIG. 1] FIG. 1 is a perspective view illustrating the appearance of an optical connector according to one embodiment of the present disclosure.
[FIG. 2] FIG. 2 is a view illustrating a cross-section perpendicular to a central axis of an optical fiber cable.
[FIG. 3] FIG. 3 is a cross-sectional view of the front portion of the optical connector, and illustrates a side cross-section taken along a central axis of an optical fiber ribbon.
[FIG. 4] FIG. 4 is a view illustrating a structure of the rear portion of the optical connector, in which a housing and a boot are cut away to illustrate the interior of the housing.
[FIG. 5] FIG. 5 is a view illustrating a structure of the rear portion of the optical connector, in which a ring included in the optical connector is further cut away to illustrate the inside of the ring.
[FIG. 6] FIG. 6 is a cross-sectional view taken along line VI-VI illustrated in FIG. 5.
[FIG. 7] FIG. 7 is a cross-sectional view taken along line VII-VII illustrated in FIG. 5.
[FIG. 8] FIG. 8 is a perspective view illustrating the appearance of a crimp seat.
[FIG. 9] FIG. 9 is a front view of the crimp seat when viewed from the rear.

### Description of Embodiments

### [Description of Embodiment of Present Disclosure]

First, the contents of an embodiment of the present disclosure will be listed and described. [1] An optical connector according to one aspect of the present disclosure includes an optical fiber cable; a first member; a second member; and a housing. The optical fiber cable includes an optical fiber, a sheath made of resin and surrounding the optical fiber, and a tensile member that is fibrous and disposed between the sheath and the optical fiber. A portion including a distal end of the optical fiber is exposed from the sheath and the tensile member. The first member has a front end located close to the front end of the optical fiber, a rear end located close to the optical fiber cable, and a through-hole which penetrates through the first member from the rear end to the front end and through which the portion including the distal end of the optical fiber passes. The second member is disposed around the first member, and sandwiches and fixes a distal end portion of the sheath and a distal end portion of the tensile member between the second member and the first member. The housing accommodates the first member, the second member, the distal end portion of the sheath, and the distal end portion of the tensile member.

In this optical connector, the distal end portion of the sheath and the distal end portion of the tensile member are fixed by being sandwiched between the first member and the second member. Furthermore, the first member and the second member are accommodated in the housing. Therefore, when attaching the optical connector to a distal end of the optical fiber cable, the sheath and the tensile member can be fixed before the housing is assembled. Therefore, the time required to perform assembly work while the sheath and the tensile member peeled from the optical fiber and extending in length remain unattended is shortened, so that a decrease in assembly work efficiency can be avoided.

[2] In the optical connector according to [1] above, the first member may include, on an outer peripheral surface of the first member, a first portion that sandwiches the sheath between the first portion and the second member, and a second portion that is separate from the first portion and that sandwiches the tensile member between the second portion and the second member. In this way, by fixing the sheath and the tensile member at separate portions, the sheath and the tensile member can be reliably fixed.

[3] In the optical connector according to [2] above, the first portion may be aligned with the second portion in a circumferential direction of the first member. In that case, since the lengths of the first member and the second member in an extending direction of the optical fiber can be made smaller, the overall length of the optical connector can be shortened. Alternatively, even in an optical connector of a type in which the fusion splice portion of the optical fiber and the sleeve that protects the fusion splice portion are present inside the housing, an increase in the overall length of the optical connector can be avoided.

[4] In the optical connector according to [2] or [3] above, a cross-section of the through-hole perpendicular to a penetration direction may have an elongated shape having a major axis and a minor axis. The first portion may be a recess extending from the rear end on the outer peripheral surface of the first member. The first portion may be spaced apart from an extension line of the major axis of the through-hole. Because the cross-section of the through-hole has an elongated shape, it becomes easier to pass a plurality of optical fibers through the through-hole when the plurality of optical fibers are integrated in a ribbon shape. In addition, since the first portion is spaced apart from the extension line of the major axis of the through-hole, thinning of the thickness of the first member between the through-hole and the outer peripheral surface due to the recess can be avoided. In other words, the outer diameter of the first member can be reduced while ensuring the necessary thickness of the first member.

[5] In the optical connector according to any one of [2] to [4] above, the first member may include a flange portion provided close to the front end. The flange portion may have a cutout portion through which the tensile member passes. The cutout portion may be provided in alignment with the second portion in an extending direction of the optical fiber. In that case, the tensile member can be easily led out to the front of the first member while providing the flange portion in the first member.

[6] In the optical connector according to any one of [2] to [4] above, the first member may include a flange portion provided close to the front end. An outer peripheral surface of the flange portion may include a first region and a second region that are flat and that face away from each other. An inner surface of the housing may include a third region that is flat and in contact with the first region, and a fourth region that is flat and in contact with the second region. In the optical connector according to [5] above, an outer peripheral surface of the flange portion may include a first region and a second region that are flat and that face away from each other. An inner surface of the housing may include a third region that is flat and in contact with the first region, and a fourth region that is flat and in contact with the second region. In that case, movement of the first member in a rotational direction inside the housing is restricted by the contact of the third region and the fourth region with the first region and the second region, respectively. Therefore, the first member can be prevented from moving in the rotational direction inside the housing.

[7] In the optical connector according to any one of [2] to [6] above, the second portion may have a groove extending in the circumferential direction of the first member. In that case, since the tensile member extends in a direction intersecting the groove, movement of the tensile member along the extending direction can be more securely prevented.

[8] In the optical connector according to any one of [1] to [4] and [7] above, the first member may include a flange portion provided close to the front end. The housing may have a projection that comes into contact with the flange portion to lock the first member. In the optical connector according to [5] or [6] above, the housing may have a projection that comes into contact with the flange portion to lock the first member. In that case, the first member can be easily positioned inside the housing.

[9] In the optical connector according to any one of [1] to [4] and [7] above, the first member may include a flange portion provided close to the front end. The housing may have an opening for introducing the optical fiber cable. An inner diameter of the opening may be smaller than an outer diameter of the flange portion. In the optical connector according to any one of [5], [6], and [8] above, the housing may have an opening for introducing the optical fiber cable. An inner diameter of the opening may be smaller than an outer diameter of the flange portion. In that case, even when a force that pulls the optical fiber cable rearward is generated, the first member can be prevented from coming off from the opening of the housing.

[10] The optical connector according to any one of [1] to [9] above may further include a ferrule member that holds a built-in fiber fusion-spliced to the optical fiber; and a fusion protection sleeve that protects a fusion splice portion between the optical fiber and the built-in fiber. The housing may hold the ferrule member, and accommodate the fusion protection sleeve. When assembling such an optical connector having the fusion splice portion and the fusion protection sleeve inside the housing, a process of fusion-splicing the optical fiber and the built-in fiber is required. According to the optical connector described in [10] above, since the fusion splicing process does not need to be performed while the sheath and the tensile member peeled from the optical fiber and extending in length remain unattended, a decrease in the work efficiency of the fusion splicing process can be avoided.

### [Details of Embodiment of Present Disclosure]

A specific example of the optical connector according to the present disclosure will be described below with reference to the drawings. The present invention is not limited to this example, and is intended to include all modifications defined by the claims and within the concept and scope of the equivalents of the claims. In the following description, the same elements in the description of the drawings are denoted by the same reference signs, and duplicate descriptions will be omitted. In the following description, "forward" refers to a direction toward another optical connector to be connected, and "rearward" refers to the opposite direction.

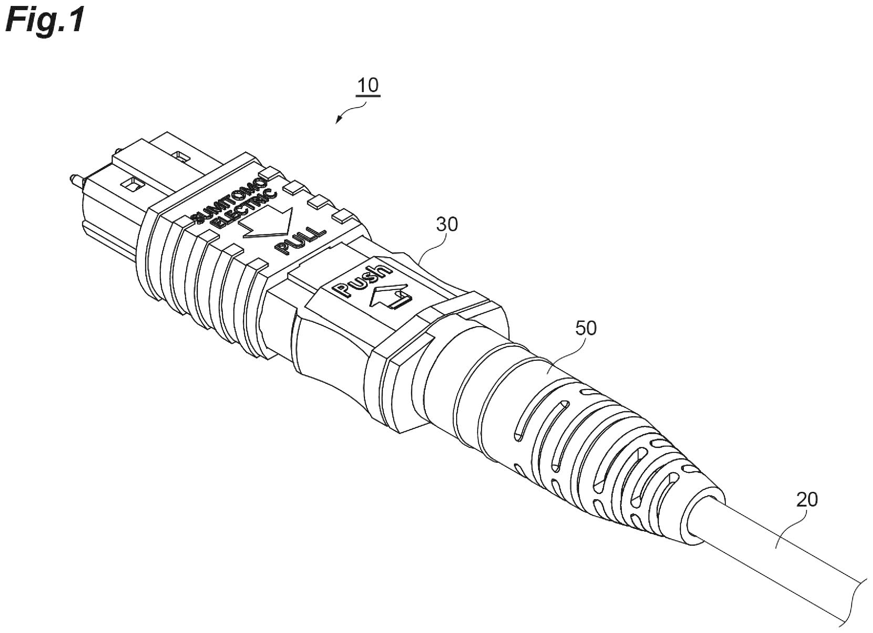

FIG. 1 is a perspective view illustrating the appearance of an optical connector 10 according to one embodiment of the present disclosure. The optical connector 10 is inserted into an adapter (not illustrated), thereby being connected to another optical connector to be connected. As illustrated in FIG. 1, the optical connector 10 of the present embodiment includes an optical fiber cable 20, a housing 30, and a boot 50.

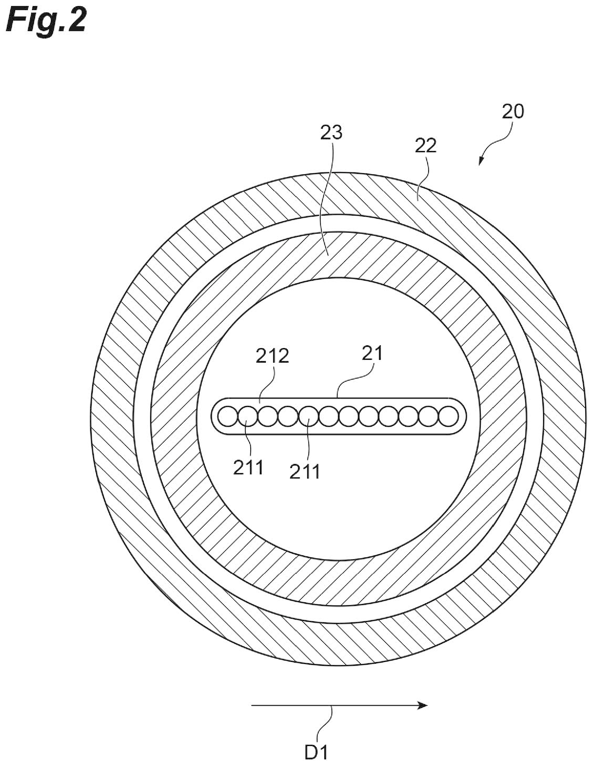

FIG. 2 is a view illustrating a cross-section perpendicular to the central axis of the optical fiber cable 20. As illustrated in FIG. 2, the optical fiber cable 20 includes an optical fiber ribbon 21, a sheath (outer jacket) 22, and a tensile member 23. The optical fiber ribbon 21 includes a plurality (12 in the figure) of optical fibers 211 and a resin coating 212 that collectively covers the plurality of optical fibers 211. The plurality of optical fibers 211 are aligned in a row along a direction D1 perpendicular to the central axis of the optical fiber cable 20. The sheath 22 is a resin layer that surrounds the optical fiber ribbon 21. The sheath 22 has a cylindrical shape, and accommodates the optical fiber ribbon 21 therein. The tensile member 23 is a fibrous member disposed between the optical fiber ribbon 21 and the sheath 22. When a force is applied to the optical fiber cable 20 in a pulling direction, the tensile member 23 resists the force, thereby preventing the optical fibers 211 from breaking.

Referring again to FIG. 1, the housing 30 is a housing that accommodates the front end portion of the optical fiber cable 20. The housing 30 is made of, for example, resin. The housing 30 has a hollow tubular shape.

The boot 50 has a cylindrical shape, the outer diameter of which gradually decreases toward the rear end of the boot 50. The boot 50 is attached to the rear end portion of the housing 30, and surrounds and protects a portion of the optical fiber cable 20 extending from the housing 30. The boot 50 is made of a flexible resin.

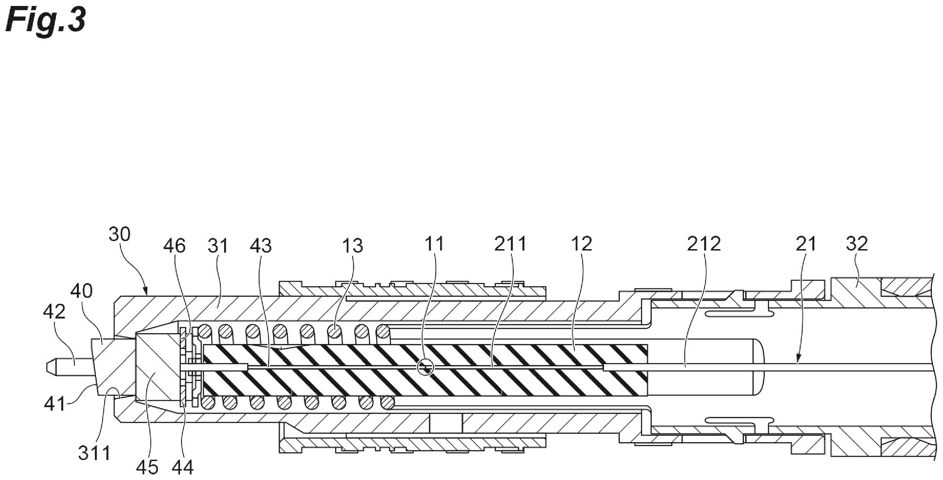

FIG. 3 is a cross-sectional view of the front portion of the optical connector 10, and illustrates a side cross-section taken along the central axis of the optical fiber ribbon 21. As illustrated in FIG. 3, the housing 30 includes a front housing 31 and a rear housing 32. The front housing 31 is disposed in front of the rear housing 32. The front housing 31 and the rear housing 32 have a hollow tubular shape. The optical fiber ribbon 21 extending forward from the distal end of the optical fiber cable 20 extends in a space formed by the front housing 31 and the rear housing 32. The resin coating 212 is removed from the distal end portion of the optical fiber ribbon 21, and the plurality of optical fibers 211 are exposed from the resin coating 212.

As illustrated in FIG. 3, the optical connector 10 further includes a fusion protection sleeve 12, a compression coil spring 13, a ferrule member 40, and a pin keeper 44.

The ferrule member 40 is provided at the front end portion of the optical connector 10. The ferrule member 40 comes into contact, at a front end surface 41, with a ferrule of another connector that is to be connected to the optical connector 10. A guide pin 42 for positioning with the ferrule of the other optical connector protrudes from the front end surface 41 of the ferrule member 40. The ferrule member 40 is made of, for example, resin.

The ferrule member 40 protrudes forward from an opening 311 formed in the front end surface of the front housing 31. The ferrule member 40 has a plurality of through-holes for inserting a plurality of built-in fibers 43. The ferrule member 40 accommodates the distal end portions of the built-in fibers 43 in the respective through-holes, thereby holding the plurality of built-in fibers 43. The number of the built-in fibers 43 is the same as the number of the optical fibers 211. The plurality of built-in fibers 43 are aligned in a row along the direction D1 illustrated in FIG. 2. First end faces of the plurality of built-in fibers 43 are exposed at the front end surface 41 of the ferrule member 40, and come into contact with end faces of a plurality of optical fibers held by the ferrule of the other optical connector. Accordingly, the plurality of built-in fibers 43 are each optically coupled to one of the plurality of optical fibers of the other optical connector.

The pin keeper 44 is made of metal, and is formed, for example, by performing sheet metal working and bending on a metal sheet. The pin keeper 44 is provided adjacent to a rear end surface 46 of the ferrule member 40. The pin keeper 44 holds the proximal end portion of the guide pin 42 inserted through a hole of the ferrule member 40.

The plurality of built-in fibers 43 extend rearward from the rear end surface 46 of the ferrule member 40 through openings formed in the pin keeper 44. Second end faces of the plurality of built-in fibers 43 are fusion-spliced to the end faces of the plurality of optical fibers 211. Therefore, a fusion splice portion 11 is formed between each built-in fiber 43 and each optical fiber 211. The fusion protection sleeve 12 protects the fusion splice portions 11, portions of the optical fibers 211 exposed from the resin coating 212, and portions of the built-in fibers 43 exposed from the ferrule member 40. The fusion protection sleeve 12 has a tube shape, and is made of, for example, a heat-shrinkable resin.

The compression coil spring 13 is placed over the fusion protection sleeve 12 so as to surround the periphery of the fusion protection sleeve 12. A first end of the compression coil spring 13 is in contact with the pin keeper 44. A second end of the compression coil spring 13 is in contact with a part of the housing 30. The compression coil spring 13 pushes the pin keeper 44, thereby biasing the ferrule member 40 forward. When the ferrule member 40 comes into contact with the ferrule of the other optical connector, the compression coil spring 13 contracts, thereby causing the ferrule member 40 to come into contact with the ferrule of the other optical connector with an appropriate pressing force. When the ferrule member 40 is not in contact with the ferrule of the other optical connector, a flange portion 45 provided at the rear portion of the ferrule member 40 comes into contact with a portion around the opening 311 of the front housing 31, thereby receiving the biasing force of the compression coil spring 13.

The front housing 31 accommodates a part of the ferrule member 40, the plurality of built-in fibers 43, the pin keeper 44, the portions of the optical fibers 211 exposed from the resin coating 212, the fusion protection sleeve 12, and the compression coil spring 13.

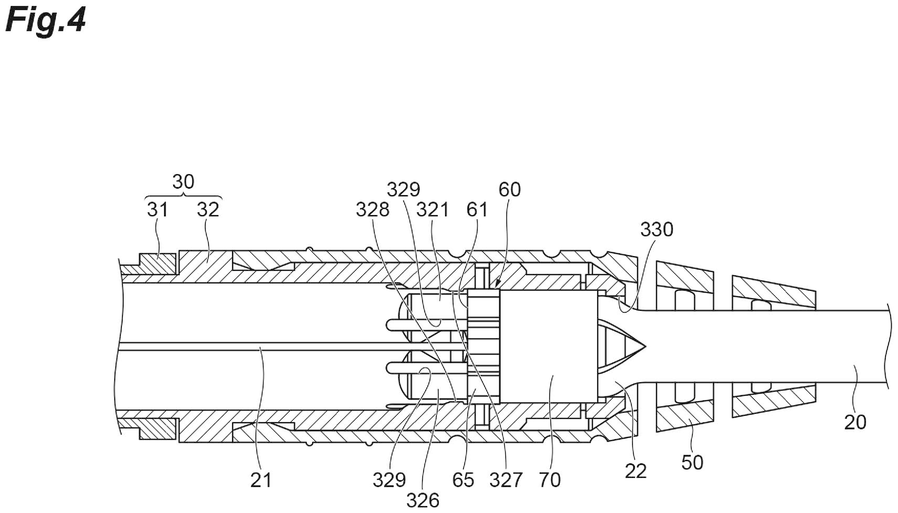

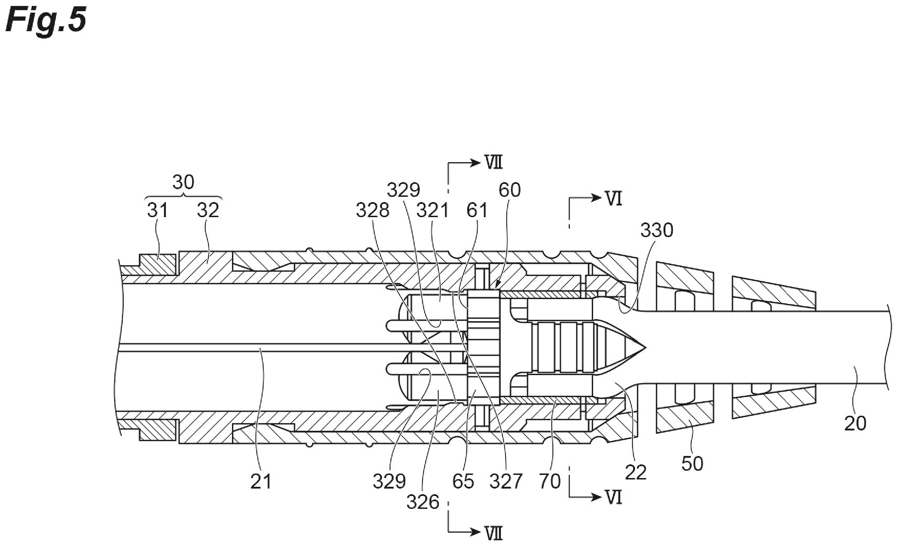

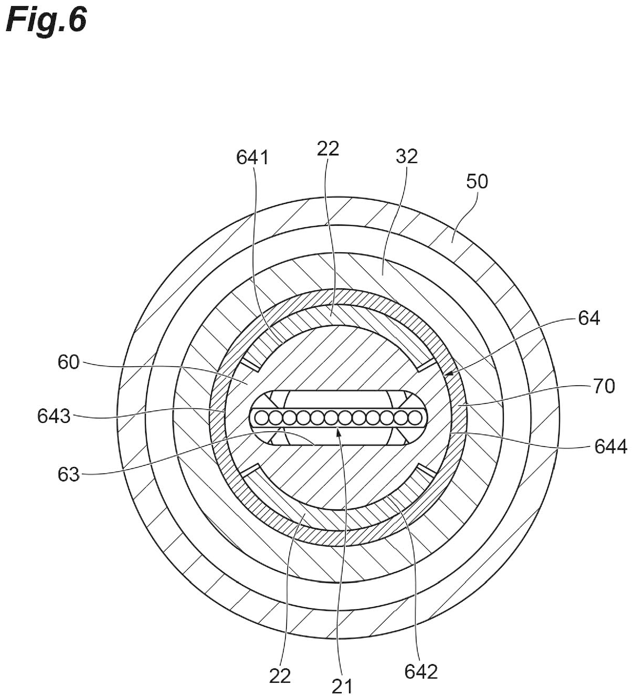

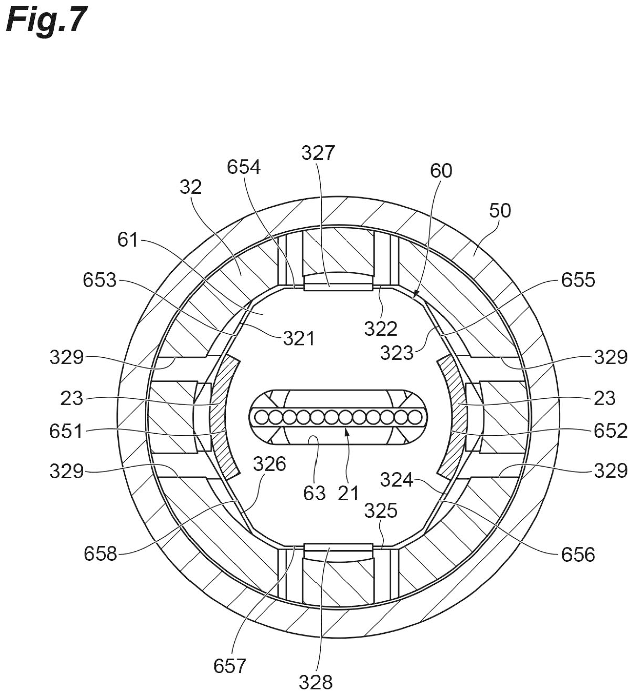

FIG. 4 is a view illustrating a structure of the rear portion of the optical connector 10, in which the housing 30 and the boot 50 are cut away to illustrate the interior of the housing 30. FIG. 5 is a view illustrating a structure of the rear portion of the optical connector 10, in which a ring 70 included in the optical connector 10 is further cut away to illustrate the inside of the ring 70. FIG. 6 is a cross-sectional view taken along line VI-VI illustrated in FIG. 5. FIG. 7 is a cross-sectional view taken along line VII-VII illustrated in FIG. 5.

As illustrated in FIGS. 4, 5, 6, and 7, the optical connector 10 further includes a crimp seat 60 having a substantially columnar shape and the ring 70 having a cylindrical shape. The crimp seat 60 is an example of a first member in the present embodiment. The ring 70 is an example of a second member in the present embodiment. The crimp seat 60 and the ring 70 are provided inside the rear housing 32 at a position close to a rear end portion thereof. The crimp seat 60 and the ring 70 are provided to sandwich and fix the distal end portion of the sheath 22 and the distal end portion of the tensile member 23 peeled from the optical fiber ribbon 21. For this purpose, the ring 70 is disposed around the crimp seat 60, and fits onto the crimp seat 60 with the distal end portion of the sheath 22 and the distal end portion of the tensile member 23 sandwiched between the ring 70 and the crimp seat 60. In FIGS. 4, 5, and 6, the tensile member 23 is not illustrated. The crimp seat 60 and the ring 70 are made of, for example, metal or resin.

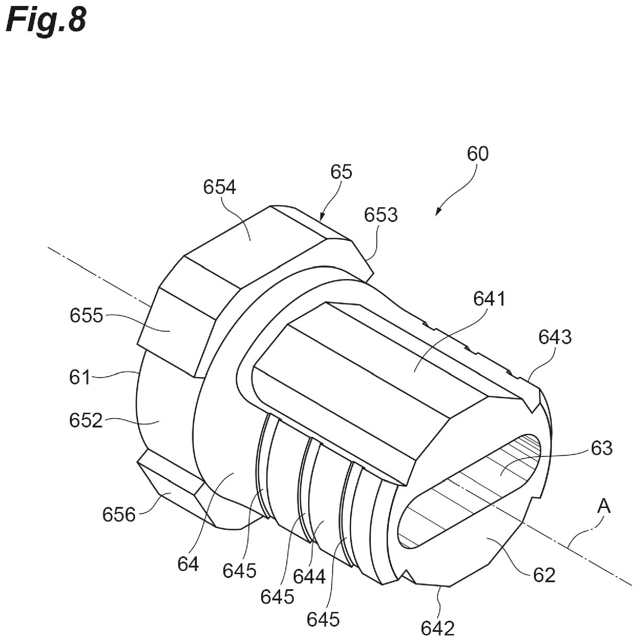

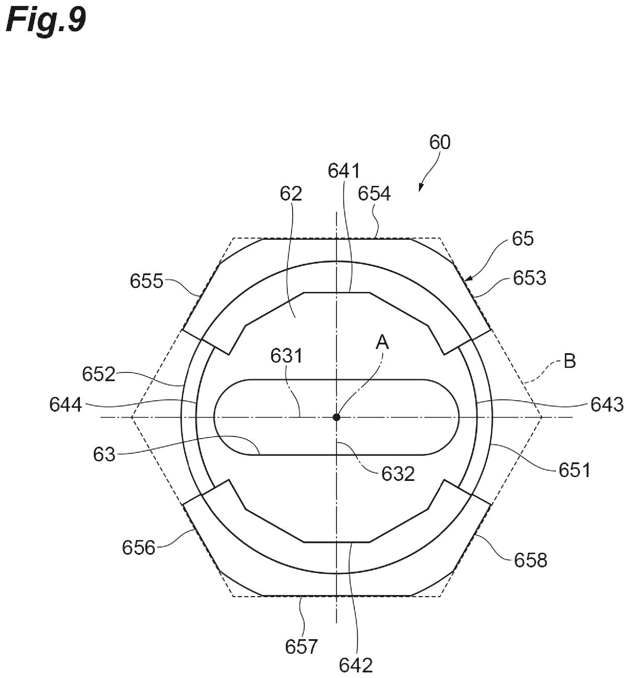

FIG. 8 is a perspective view illustrating the appearance of the crimp seat 60. FIG. 9 is a front view of the crimp seat 60 when viewed from the rear. As illustrated in FIGS. 4 to 9, the crimp seat 60 has a substantially columnar shape. The crimp seat 60 has a front end surface 61 (front end), a rear end surface 62 (rear end), a through-hole 63, an outer peripheral surface 64, and a flange portion 65. The front end surface 61 is located on the side of the crimp seat 60 that is close to the distal ends of the plurality of optical fibers 211, and faces forward. The rear end surface 62 is located on the side of the crimp seat 60 that is close to the optical fiber cable 20, and faces rearward. In one example, the front end surface 61 and the rear end surface 62 extend perpendicularly to an extending direction of the optical fiber ribbon 21. In one example, the front end surface 61 and the rear end surface 62 are flat.

The through-hole 63 penetrates through the crimp seat 60 from the rear end surface 62 to the front end surface 61 along the extending direction of the optical fiber ribbon 21. The optical fiber ribbon 21 passes through the through-hole 63, and extends forward from the optical fiber cable 20. In the illustrated example, a cross-section perpendicular to a penetration direction of the through-hole 63, that is, perpendicular to the extending direction of the optical fiber ribbon 21 has an elongated shape having a major axis 631 and a minor axis 632. The cross-sectional shape of the through-hole 63 is, for example, an oval shape. The cross-sectional shape of the through-hole 63 is not limited thereto, and may be, for example, various shapes such as an elliptical shape, a diamond shape, a circular shape, or a rectangular shape.

The crimp seat 60 includes first crimp portions (first portions) 641 and 642 and second crimp portions (second portions) 643 and 644 on the outer peripheral surface 64. The first crimp portions 641 and 642 are portions for sandwiching and fixing the sheath 22 between the first crimp portions 641 and 642 and the ring 70. The first crimp portions 641 and 642 are provided at the positions where a central axis A of the crimp seat 60 is sandwiched therebetween. In other words, the first crimp portion 642 is provided on the side opposite to the first crimp portion 641 with the central axis A of the crimp seat 60 sandwiched therebetween. In one example, the first crimp portions 641 and 642 are spaced apart from the extension line of the major axis 631 of the through-hole 63, and are located on the extension line of the minor axis 632 of the through-hole 63.

The first crimp portions 641 and 642 are recesses extending from the rear end surface 62 on the outer peripheral surface 64 of the crimp seat 60. That is, the bottom surfaces of the first crimp portions 641 and 642 are located closer to the central axis A than the other portions of the outer peripheral surface 64 excluding the first crimp portions 641 and 642. The first crimp portions 641 and 642 extend from the rear end surface 62 to a position just before the flange portion 65 but do not reach the flange portion 65. In the illustrated example, the bottom surfaces of the first crimp portions 641 and 642 are formed by a plurality of flat surfaces with different angles. The bottom surfaces of the first crimp portions 641 and 642 are not limited to having this shape, and may be, for example, columnar surfaces.

The second crimp portions 643 and 644 are portions for sandwiching and fixing the tensile member 23 between the second crimp portions 643 and 644 and the ring 70. The second crimp portions 643 and 644 are provided at the positions where the central axis A of the crimp seat 60 is sandwiched therebetween. In other words, the second crimp portion 644 is provided on the side opposite to the second crimp portion 643 with the central axis A of the crimp seat 60 sandwiched therebetween. The second crimp portions 643 and 644 are provided at positions different from those of the first crimp portions 641 and 642. In one example, the second crimp portions 643 and 644 are located on the extension line of the major axis 631 of the through-hole 63. Furthermore, the first crimp portion 641, the second crimp portion 643, the first crimp portion 642, and the second crimp portion 644 are disposed in this order in a circumferential direction of the crimp seat 60, that is, the first crimp portions 641 and 642 and the second crimp portions 643 and 644 are disposed in alignment and alternately with each other. The first crimp portions 641 and 642 and the second crimp portions 643 and 644 may be adjacent to each other, or may be disposed merely next to each other.

The second crimp portions 643 and 644 are regions on the outer peripheral surface 64 of the crimp seat 60, the regions extending from the rear end surface 62. Surfaces that form the second crimp portions 643 and 644 are spaced further apart from the central axis A than the bottom surfaces of the first crimp portions 641 and 642. In other words, an outer diameter of the crimp seat 60 at the second crimp portions 643 and 644 is larger than an outer diameter of the crimp seat 60 at the first crimp portions 641 and 642. The second crimp portions 643 and 644 have one or a plurality of grooves 645 extending in the circumferential direction of the crimp seat 60. The plurality of grooves 645 are formed in alignment with in a direction along the central axis A. In the illustrated example, the second crimp portions 643 and 644 are formed by columnar surfaces. The second crimp portions 643 and 644 are not limited to this shape, and may, for example, be formed by a plurality of flat surfaces with different angles.

The flange portion 65 is provided close to the front end surface 61 of the crimp seat 60. In the illustrated example, the first end surface of the flange portion 65 constitutes the front end surface 61. The flange portion 65 protrudes from the outer peripheral surface 64 of the crimp seat 60 in a radial direction. In other words, an outer diameter of the flange portion 65 is larger than an outer diameter of the other portion of the crimp seat 60.

The flange portion 65 has cutout portions 651 and 652 through which the tensile member 23 passes. The cutout portions 651 and 652 are recesses in a circumferential direction of the flange portion 65. The cutout portion 651 is provided in alignment with the second crimp portion 643 in the direction along the central axis A, that is, in the extending direction of the optical fiber ribbon 21. The cutout portion 652 is provided in alignment with the second crimp portion 644 in the same direction. In the illustrated example, the bottom surface of each of the cutout portions 651 and 652 is continuous with the outer peripheral surface 64. An outer diameter of the crimp seat 60 at the cutout portions 651 and 652 is smaller than an outer diameter of the crimp seat 60 at portions of the flange portion 65 excluding the cutout portions 651 and 652.

The outer peripheral surface of the flange portion 65 includes first regions 653, 654, and 655 that are flat surfaces, and second regions 656, 657, 658 that are flat surfaces. The first region 653 and the second region 656 face away from each other. The first region 654 and the second region 657 face away from each other. The first region 655 and the second region 658 face away from each other. The first regions 653, 654, and 655 and the second regions 656, 657, 658 each constitute one of the six faces of an imaginary regular hexagonal prism B (see FIG. 9).

Referring again to FIGS. 4 to 7, the rear housing 32 accommodates a portion of the optical fiber ribbon 21 from which the sheath 22 and the tensile member 23 are peeled and which is exposed, the crimp seat 60, the ring 70, the distal end portion of the sheath 22, and the distal end portion of the tensile member 23.

The inner surface of the rear housing 32 includes third regions 321, 322, and 323 that are flat and in contact with the first regions 653, 654, and 655 of the crimp seat 60, respectively. In addition, the inner surface of the rear housing 32 includes fourth regions 324, 325, and 326 that are flat and in contact with the second regions 656, 657 and 658 of the crimp seat 60, respectively. The third regions 321, 322, and 323 and the fourth regions 324, 325, and 326 suppress movement of the crimp seat 60 in a rotational direction inside the rear housing 32.

The rear housing 32 further has projections 327 and 328 (see FIGS. 4 and 7). The projections 327 and 328 are located in front of the crimp seat 60, and protrude from the inner surface of the rear housing 32. The projections 327 and 328 are provided on the inner surface of the rear housing 32 at positions facing each other. The projections 327 and 328 come into contact with the first end surface (front end surface 61) of the flange portion 65 of the crimp seat 60 to lock the crimp seat 60 and to position the crimp seat 60.

The front side surfaces of the projections 327 and 328 are inclined so as to become lower toward the front. In addition, slits 329 extending forward are formed in portions of the rear housing 32 between the projection 327 and the projection 328. Accordingly, during assembly of the optical connector 10, the spacing between the projection 327 and the projection 328 can be easily widened such that the crimp seat 60 passes over the projections 327 and 328.

The rear housing 32 further has an opening 330 for introducing the optical fiber cable 20. An inner diameter of the opening 330 is smaller than the outer diameter of the flange portion 65 and an outer diameter of the ring 70. Furthermore, the inner diameter of the opening 330 is smaller than a diameter of a raised portion of the sheath 22 in the vicinity of the rear end of the ring 70. Accordingly, even when a force that pulls the optical fiber cable 20 rearward is generated, the sheath 22 can be prevented from coming off from the opening 330 of the rear housing 32. In the illustrated example, the edge of the opening 330 is in contact with the sheath 22.

Effects obtained by the optical connector 10 of the present embodiment having the above configuration are as follows. In the optical connector 10, the distal end portion of the sheath 22 and the distal end portion of the tensile member 23 are fixed by being sandwiched between the crimp seat 60 and the ring 70. Furthermore, the crimp seat 60 and the ring 70 are accommodated in the rear housing 32. Therefore, when attaching the optical connector 10 to the distal end of the optical fiber cable 20, the sheath 22 and the tensile member 23 can be fixed before the rear housing 32 is assembled. Therefore, the time required to perform assembly work while the sheath 22 and the tensile member 23 peeled from the optical fiber ribbon 21 and extending in length remain unattended is shortened, so that a decrease in assembly work efficiency can be avoided.

As in the present embodiment, the crimp seat 60 may include, on the outer peripheral surface 64, the first crimp portions 641 and 642 that sandwich the sheath 22 between the first crimp portions 641 and 642 and the ring 70, and the second crimp portions 643 and 644 that are separate from the first crimp portions 641 and 642 and sandwich the tensile member 23 between the second crimp portions 643 and 644 and the ring 70. In this way, by fixing the sheath 22 and the tensile member 23 at separate portions, the sheath 22 and the tensile member 23 can be reliably fixed.

As in the present embodiment, the first crimp portions 641 and 642 and the second crimp portions 643 and 644 may be aligned with each other in the circumferential direction of the crimp seat 60. In that case, since the lengths of the crimp seat 60 and the ring 70 in the extending direction of the optical fiber ribbon 21 can be made smaller, the overall length of the optical connector 10 can be shortened. Alternatively, as in the optical connector 10 of the present embodiment, even in an optical connector of a type in which the fusion splice portion 11 of the optical fiber ribbon 21 and the fusion protection sleeve 12 that protects the fusion splice portion 11 are present inside the rear housing 32, an increase in the overall length of the optical connector can be avoided. In addition, since the sheath 22 and the tensile member 23 can be fixed using one ring 70, the number of work steps can be reduced compared to when the sheath 22 and the tensile member 23 are fixed by individual members.

As in the present embodiment, the cross-section of the through-hole 63 perpendicular to the penetration direction may have an elongated shape having the major axis 631 and the minor axis 632. The first crimp portions 641 and 642 may be recesses extending from the rear end surface 62 on the outer peripheral surface 64 of the crimp seat 60, and the first crimp portions 641 and 642 may be spaced apart from the extension line of the major axis 631 of the through-hole 63. By configuring the cross-section of the through-hole 63 in an elongated shape, it becomes easier to pass the optical fiber ribbon 21 through the through-hole 63 when forming the optical fiber ribbon 21 in which the plurality of optical fibers 211 are integrated in a ribbon shape as in the present embodiment. In addition, since the first crimp portions 641 and 642 are spaced apart from the extension line of the major axis 631 of the through-hole 63, thinning of the thickness of the crimp seat 60 between the through-hole 63 and the outer peripheral surface 64 due to the recesses can be avoided. In other words, the outer diameter of the crimp seat 60 can be reduced while ensuring the necessary thickness of the crimp seat 60.

As in the present embodiment, the crimp seat 60 may include the flange portion 65 provided close to the front end surface 61. The flange portion 65 may have the cutout portions 651 and 652 through which the tensile member 23 passes. The cutout portions 651 and 652 are provided in alignment with the second crimp portions 643 and 644, respectively, in the extending direction of the optical fiber ribbon 21. In that case, the tensile member 23 can be easily led out to the front of the crimp seat 60 while providing the flange portion 65 in the crimp seat 60.

As in the present embodiment, the outer peripheral surface of the flange portion 65 may include the first regions 653, 654, and 655, and the second regions 656, 657, and 658 that are flat and that face away from each other. The inner surface of the rear housing 32 may include the third regions 321, 322, and 323 that are flat and in contact with the first regions 653, 654, and 655, respectively, and the fourth regions 324, 325, and 326 that are flat and in contact with the second regions 656, 657, and 658, respectively. In that case, movement of the crimp seat 60 in the rotational direction inside the rear housing 32 is prevented by the the third regions 321, 322, and 323 and the fourth regions 324, 325, and 326 coming into contact with the first regions 653, 654, and 655 and the second regions 656, 657, and 658, respectively. Therefore, the crimp seat 60 can be prevented from moving in the rotational direction inside the rear housing 32. The present invention is not limited to the configuration of the present embodiment, and at least one first region and at least one second region may be present. Similarly, at least one third region and at least one fourth region may be present. In the present embodiment, the first regions 653, 654, and 655 and the second regions 656, 657, and 658 each constitute one of the six faces of the regular hexagonal prism B (see FIG. 9); however, the first regions and the second regions may constitute the faces of other polygonal shapes such as a triangular shape or a rectangular shape.

As in the present embodiment, the second crimp portions 643 and 644 may have the grooves 645 extending in the circumferential direction of the crimp seat 60. In that case, since the tensile member 23 extends in a direction intersecting the grooves 645, the grooves 645 provide resistance to movement of the tensile member 23, so that movement of the tensile member 23 along the extending direction can be more securely prevented.

As in the present embodiment, the rear housing 32 may have the projections 327 and 328 that come into contact with the flange portion 65 to lock the crimp seat 60. In that case, the crimp seat 60 can be easily positioned inside the rear housing 32. The present invention is not limited to the present embodiment, and the number of the projections may be three or more.

As in the present embodiment, the rear housing 32 may have the opening 330 for introducing the optical fiber cable 20 on the rear end side. The inner diameter of the opening 330 may be smaller than the outer diameter of the flange portion 65. In that case, even when a force that pulls the optical fiber cable 20 rearward is generated, the crimp seat 60 can be prevented from coming off from the opening 330 of the rear housing 32.

As in the present embodiment, the optical connector 10 may further include the ferrule member 40 that holds the built-in fibers 43 fusion-spliced to the optical fiber ribbon 21; and the fusion protection sleeve 12 that protects the fusion splice portion 11 between the optical fiber ribbon 21 and the built-in fibers 43. The front housing 31 holds the ferrule member 40, and accommodate the fusion protection sleeve 12. When assembling the optical connector 10 having the fusion splice portion and the fusion protection sleeve 12 inside the housing 30, a process of fusion-splicing the optical fiber ribbon 21 and the built-in fibers 43 is required. According to the optical connector 10, since the fusion splicing process does not need to be performed while the sheath 22 and the tensile member 23 peeled from the optical fiber ribbon 21 and extending in length remain unattended, a decrease in the work efficiency of the fusion splicing process can be avoided.

The optical connector according to the present disclosure is not limited to the embodiment described above, and can be modified in other various forms. For example, in the embodiment described above, an example in which the configuration of the present disclosure is applied to an optical connector of a type that contains the fusion protection sleeve 12 has been illustrated. The configuration of the present disclosure can also be applied to an optical connector of a type in which the fusion protection sleeve is not built in, in other words, which does not have the fusion splice portion inside the housing.

### Reference Signs List

10: optical connector, 11: fusion splice portion, 12: fusion protection sleeve, 20: optical fiber cable, 21: optical fiber ribbon, 22: sheath, 23: tensile member, 30: housing, 31: front housing, 32: rear housing, 40: ferrule member, 41: front end surface, 42: guide pin, 43: built-in fiber, 44: pin keeper, 45: flange portion, 46: rear end surface, 50: boot, 60: crimp seat, 61: front end surface, 62: rear end surface, 63: through-hole, 64: outer peripheral surface, 65: flange portion, 70: ring, 211: optical fiber, 212: resin coating, 311: opening, 321, 322, 323: third region, 324, 325, 326: fourth region, 327, 328: projection, 329: slit, 330: opening, 631: major axis, 632: minor axis, 641, 642: first crimp portion, 643, 644: second crimp portion, 645: groove, 651, 652: cutout portion, 653, 654, 655: first region, 656, 657, 658: second region, A: central axis, B: regular hexagonal prism, D1: direction.

## Claims

1. An optical connector, comprising:
an optical fiber cable which includes an optical fiber, a sheath made of resin and surrounding the optical fiber, and a tensile member that is fibrous and disposed between the sheath and the optical fiber, wherein a portion including a distal end of the optical fiber is exposed from the sheath and the tensile member;
a first member having a front end located close to the distal end of the optical fiber, a rear end located close to the optical fiber cable, and a through-hole which penetrates through the first member from the rear end to the front end and through which the portion including the distal end of the optical fiber passes;
a second member that is disposed around the first member, and that sandwiches and fixes a distal end portion of the sheath and a distal end portion of the tensile member between the second member and the first member; and
a housing that accommodates the first member, the second member, the distal end portion of the sheath, and the distal end portion of the tensile member.

2. The optical connector according to claim 1,
wherein the first member includes, on an outer peripheral surface of the first member, a first portion that sandwiches the sheath between the first portion and the second member, and a second portion that is separate from the first portion and that sandwiches the tensile member between the second portion and the second member.

3. The optical connector according to claim 2,
wherein the first portion is aligned with the second portion in a circumferential direction of the first member.

4. The optical connector according to claim 2 or 3,
wherein a cross-section of the through-hole perpendicular to a penetration direction has an elongated shape having a major axis and a minor axis,
the first portion is a recess extending from the rear end on the outer peripheral surface of the first member, and
the first portion is spaced apart from an extension line of the major axis of the through-hole.

5. The optical connector according to any one of claims 2 to 4,
wherein the first member includes a flange portion provided close to the front end,
the flange portion has a cutout portion through which the tensile member passes, and
the cutout portion is provided in alignment with the second portion in an extending direction of the optical fiber.

6. The optical connector according to any one of claims 2 to 4,
wherein the first member includes a flange portion provided close to the front end,
an outer peripheral surface of the flange portion includes a first region and a second region that are flat and that face away from each other, and
an inner surface of the housing includes a third region that is flat and in contact with the first region, and a fourth region that is flat and in contact with the second region.

7. The optical connector according to any one of claims 2 to 6,
wherein the second portion has a groove extending in a circumferential direction of the first member.

8. The optical connector according to any one of claims 1 to 4 and 7,
wherein the first member includes a flange portion provided close to the front end, and
the housing has a projection that comes into contact with the flange portion to lock the first member.

9. The optical connector according to any one of claims 1 to 4 and 7,
wherein the first member includes a flange portion provided close to the front end,
the housing has an opening for introducing the optical fiber cable on a rear end side, and
an inner diameter of the opening is smaller than an outer diameter of the flange portion.

10. The optical connector according to any one of claims 1 to 9, further comprising:
a ferrule member that holds a built-in fiber fusion-spliced to the optical fiber; and
a fusion protection sleeve that protects a fusion splice portion between the optical fiber and the built-in fiber,
wherein the housing holds the ferrule member and accommodates the fusion protection sleeve.

11. The optical connector according to claim 5,
wherein an outer peripheral surface of the flange portion includes a first region and a second region that are flat and that face away from each other, and
an inner surface of the housing includes a third region that is flat and in contact with the first region, and a fourth region that is flat and in contact with the second region.

12. The optical connector according to claim 5 or 6,
wherein the housing has a projection that comes into contact with the flange portion to lock the first member.

13. The optical connector according to claim 5, 6, or 8,
wherein the housing has an opening for introducing the optical fiber cable on a rear end side, and
an inner diameter of the opening is smaller than an outer diameter of the flange portion.

14. The optical connector according to any one of claims 11 to 13, further comprising:
a ferrule member that holds a built-in fiber fusion-spliced to the optical fiber; and
a fusion protection sleeve that protects a fusion splice portion between the optical fiber and the built-in fiber,
wherein the housing holds the ferrule member and accommodates the fusion protection sleeve.
